# EUROPÄISCHE PATENTANMELDUNG

(11) **EP 3 843 332 A1**
(43) Veröffentlichungstag der Anmeldung: **30.06.2021**
(21) Anmeldenummer: 19219277.1
(22) Anmeldetag: 23.12.2019
(51) Int. Cl.: H04L 12/24, G06F 21/31, G06F 21/62, H04L 29/06

(54) **VERFAHREN ZUR ÜBERWACHUNG VON DATENVERKEHR IN EINEM KOMMUNIKATIONSNETZ UND ZUGRIFFSSTEUERUNGSSYSTEM**

(71) Anmelder: Siemens Aktiengesellschaft, 80333 München (DE)
(72) Erfinder: Albrecht, Harald, 90475 Nürnberg (DE); Zeltner, Armin, 91085 Weisendorf (DE)

(57) **Zusammenfassung**

Zur Überwachung von Datenverkehr in einem Kommunikationsnetz, über das Steuerungsanwendungen mittels Ablaufsteuerungskomponenten (113-114, 123-124), für deren Nutzung erste Zugriffsrechte überprüft werden, bereitgestellt werden, gibt eine Zugriffssteuerungseinrichtung (105) durch die Ablaufsteuerungskomponenten genutzte Kommunikationsnetz-Schnittstellen (110, 120) zum Zugriff frei und überprüft hierfür zweite Zugriffsrechte (152) zur Nutzung der Kommunikationsnetz-Schnittstellen. Bei einer Anfrage (221-223) eines Benutzers (211-213) zur Überwachung von Datenverkehr, der von einer ausgewählten Steuerungsanwendung ausgeht und/oder dort terminiert, fragt die Zugriffssteuerungseinrichtung von einer Überwachungseinrichtung (103) erste Zugriffsrechte des Benutzers zur Nutzung der ausgewählten Steuerungsanwendung ab. In Abhängigkeit der von der Überwachungseinrichtung abgefragten ersten Zugriffsrechte räumt die Zugriffssteuerungseinrichtung für die angefragte Überwachung des Datenverkehrs zweite Zugriffsrechte zur Nutzung der Kommunikationsnetz-Schnittstellen ein, die der ausgewählten Steuerungsanwendung zugeordnet sind.

## Beschreibung

Die vorliegende Erfindung betrifft ein Verfahren zur Überwachung von Datenverkehr in einem Kommunikationsnetz, insbesondere in einem Kommunikationsnetz eines industriellen Automatisierungssystems, und ein Zugriffssteuerungssystem.

Industrielle Automatisierungssysteme umfassen üblicherweise eine Vielzahl von über ein industrielles Kommunikationsnetz miteinander vernetzten Automatisierungsgeräten und dienen im Rahmen einer Fertigungs- oder Prozessautomatisierung zur Steuerung oder Regelung von Anlagen, Maschinen bzw. Geräten. Aufgrund zeitkritischer Rahmenbedingungen in industriellen Automatisierungssystemen werden zur Kommunikation zwischen Automatisierungsgeräten überwiegend Echtzeit-Kommunikationsprotokolle, wie PROFINET, PROFIBUS, Real-Time-Ethernet oder Time-Sensitive Networking (TSN), verwendet. Insbesondere können Steuerungsdienste bzw. -anwendungen automatisiert und auslastungsabhängig auf aktuell verfügbare Server oder virtuelle Maschinen eines industriellen Automatisierungssystems zu verteilt werden.

Unterbrechungen von Kommunikationsverbindungen zwischen Rechnereinheiten eines industriellen Automatisierungssystems oder Automatisierungsgeräten können zu einer unerwünschten oder unnötigen Wiederholung einer Übermittlung einer Dienstanforderung führen. Außerdem können nicht oder nicht vollständig übermittelte Nachrichten beispielsweise einen Übergang oder Verbleib eines industriellen Automatisierungssystems in einen sicheren Betriebszustand verhindern.

Aufgrund einer Nutzung für häufig äußerst unterschiedliche Anwendungen können in Ethernet-basierten Kommunikationsnetzen beispielsweise Probleme entstehen, wenn Netzressourcen für eine Übermittlung von Datenströmen oder von Datenrahmen mit Echtzeitanforderungen konkurrierend für eine Übermittlung von Datenrahmen mit großem Nutzdateninhalt ohne spezielle Dienstgüteanforderungen beansprucht werden. Dies kann dazu führen, dass Datenströme oder Datenrahmen mit Echtzeitanforderungen nicht entsprechend einer angeforderten bzw. benötigten Dienstgüte übermittelt werden.

In der älteren europäischen Patentanmeldung mit dem Anmeldeaktenzeichen 19166203.0 ist ein Verfahren zur automatischen Konfiguration eines Automatisierungsgeräts beschrieben, bei dem eine Geräte-Management-Einheit überwacht, ob dem Automatisierungsgerät ein Automatisierungssystem-Kenner zugeordnet wird. Wenn die Geräte-Management-Einheit eine solche Zuordnung erkannt hat, fragt sie bei einer zentralen Management-Einheit eines Clusters an, ob in einer Cluster-Zustands-Datenbank mit Beschreibungsobjekten für zumindest einen Knoten des Clusters bereits ein Beschreibungsobjekt existiert, in dem der dem Automatisierungsgerät zugeordnete Automatisierungssystem-Kenner hinterlegt ist. Falls ein solches Beschreibungsobjekt nicht existiert, oder falls ein solches Beschreibungsobjekt existiert, dieses jedoch als inaktiv deklariert ist, erzeugt die Geräte-Management-Einheit in der Cluster-Zustands-Datenbank für einen dem Automatisierungsgerät zugeordneten Knoten-Kenner ein Beschreibungsobjekt, in dem der dem Automatisierungsgerät zugeordnete Automatisierungs-Kenner hinterlegt ist.

Aus der älteren europäischen Patentanmeldung mit dem Anmeldeaktenzeichen 19180018.4 ist ein Verfahren zur Bereitstellung von Steuerungsanwendungen bekannt, bei dem Kommunikationsnetzadressen von Ablaufsteuerungskomponenten, die Steuerungsanwendungen bereitstellen, sowie Identifikatoren der Ablaufsteuerungskomponenten oder von Server-Einrichtungen, auf denen die Ablaufsteuerungskomponenten ausgeführt werden, von einer Überwachungseinrichtung abfragt werden. Aus den abgefragten Kommunikationsnetzadressen und Identifikatoren sowie aus Bezeichnungen der Steuerungsanwendungen erzeugt eine Konfigurationssteuerungseinrichtung Konfigurationsinformationen für eine Weiterleitungseinrichtung. Die Weiterleitungseinrichtung nimmt Anfragen von Endgeräten zur Nutzung der Steuerungsanwendungen entgegen und leitet diese entsprechend den Konfigurationsinformationen an eine jeweilige Ablaufsteuerungskomponente weiter.

Die ältere europäischen Patentanmeldung mit dem Anmeldeaktenzeichen 19198405.3 betrifft ein Verfahren zur Bestimmung einer Container-Konfiguration eines Systems mit Software-Containern, die mittels Container-Engines bereitgestellt und verwaltet werden. Die Container-Engines werden mittels eines Discovery-Moduls erfasst. Für die erfassten Container-Engines werden Steuerungskanäle ermittelt werden, über welche die Container-Engines angesprochen werden können. Unter Nutzung der Steuerungskanäle wird ermittelt, welche Container zu welchen Container-Engines gehören und welche Prozesskennungen die Container jeweils aufweisen.

Aus der älteren europäischen Patentanmeldung mit dem Anmeldeaktenzeichen 19204976.5 ist ein Verfahren zur Diagnose des Datenverkehrs in einem Cluster mit mehreren Arbeitsknoten bekannt, bei dem durch die Arbeitsknoten Container bzw. Pods bereitgestellt werden. Mittels eines Cluster-Erfassungsmoduls werden Informationen erfasst, welchen Arbeitsknoten ein Knoten-Erfassungsmodul zugeordnet ist. Empfängt das Cluster-Erfassungsmodul eine Anfrage zum Erfassen von Datenpaketen, kontaktiert das Cluster-Erfassungsmodul die Knoten-Erfassungsmodule der betroffenen Knoten, und die Knoten-Erfassungsmodule erfassen Datenpakete. Außerdem leiten die Knoten-Erfassungsmodule die erfassten Datenpakete bzw. deren Duplikate an das Cluster-Erfassungsmodul weiter. Das Cluster-Erfassungsmodul leitet die erfassten Datenpakete bzw. Duplikate wiederum an eine jeweils anfragende Einheit weiter.

Die ältere internationale Patentanmeldung mit dem Anmeldeaktenzeichen PCT/EP2019/082894 betrifft ein Verfahren zur Erfassung von Datenpakten, die von einem ersten Container innerhalb eines Clusters von Containern stammen. Dabei sind jedem Container mehrere Netzwerk-Schnittstellen zur Übermittlung von Datenpaketen zugeordnet. Sobald eine erste Verbindung zur Übermittlung von Datenpaketen über eine erste Netzwerk-Schnittstelle, die dem ersten Container zugeordnet ist, detektiert wird, wird eine dem ersten Container zugeordnete Kennung in einen der ersten Verbindung zugeordneten Datenstrom eingefügt. Anhand der eingefügten Kennung kann der erste Container zur Erfassung von Datenpakten, die von ihm stammen, identifiziert werden.

Bestehende Mittel zum Aufzeichnen bzw. Erfassen von Datenverkehr basieren im Wesentlichen auf Betriebssystem-seitig vorgegebaren Benutzerrollen bzw. -rechten und verfügen üblicherweise über keine Informationen über Zugriffsrechte, die Nutzern innerhalb von Virtualisierungs- bzw. Ablaufsteuerungsumgebungen zugeordnet sind. Zu diesen Virtualisierungs- bzw. Ablaufsteuerungsumgebungen zählen insbesondere Container-Laufzeitumgebungen als Virtualisierungslösungen auf Betriebssystemebene. Derartige Container-Laufzeitumgebungen können besonders im Fall von zahlreichen durch Container bereitzustellenden Anwendungen mittels Orchestrierungssystemen verwaltet, die üblicherweise über eigene Zugriffssteuerungssystem verfügen. Eine Abbildung in derartigen Zugriffssteuerungssystemen vorgesehener Benutzerrollenmodelle auf Betriebssystem-seitig vorgegebbare Benutzerrechte erscheint problematisch, da dies zu einem hohen Aufwand für eine feingliedrige Festlegung zusätzlicher Benutzerrechte auf Betriebssystemebene führt. Insbesondere resultiert eine erhöhte Komplexität der Festlegung von Benutzerrechten häufig in einer gesteigerten Fehleranfälligkeit. Somit ergeben sich hierdurch sogar erhöhte Sicherheitsrisiken.

Der vorliegenden Erfindung liegt daher die Aufgabe zugrunde, ein sicheres und aufwandsarm zu implementierendes Verfahren zur Überwachung von Datenverkehr, der mittels Ablaufsteuerungsumgebungen bereitgestellten Steuerungsanwendungen zugeordnet ist, in einem Kommunikationsnetz zu schaffen sowie eine geeignete Vorrichtung zur Durchführung des Verfahrens anzugeben.

Diese Aufgabe wird erfindungsgemäß durch ein Verfahren mit den in Anspruch 1 angegebenen Merkmalen und durch ein Zugriffssteuerungssystem mit den in Anspruch 13 angegebenen Merkmalen gelöst. Vorteilhafte Weiterbildungen sind in den abhängigen Ansprüchen angegeben.

Entsprechend dem erfindungsgemäßen Verfahren zur Überwachung von Datenverkehr in einem Kommunikationsnetz werden über das Kommunikationsnetz Steuerungsanwendungen durch Server-Einrichtungen zur Nutzung bereitgestellt. Die Steuerungsanwendungen werden jeweils mittels Ablaufsteuerungskomponenten, insbesondere Software-Container, bereitgestellt, die in mittels der Server-Einrichtungen gebildete Ablaufsteuerungsumgebungen ladbar und dort ausführbar sind. Vorteilhafterweise sind die Ablaufsteuerungskomponenten auf jeweils andere Server-Einrichtungen zur dortigen Ausführung migrierbar bzw. auf jeweils anderen Server-Einrichtungen zeitgleich ausführbar. Darüber hinaus können Speicherabbilder für Software-Container beispielsweise aus einem durch eine Vielzahl von Nutzern lesend bzw. schreibend zugreifbaren Speicher- und Bereitstellungssystem abgerufen werden.

Des Weiteren steuert eine den Server-Einrichtungen zugeordnete Überwachungseinrichtung erfindungsgemäß ein Anlegen, Löschen bzw. Ändern der Ablaufsteuerungskomponenten und registriert die Steuerungsanwendungen mit ihrem jeweiligen Ausführungsstatus. Dabei überprüft die Überwachungseinrichtung erste Zugriffsrechte zur Nutzung der Steuerungsanwendungen. Vorzugsweise werden die ersten Zugriffsrechte zur Nutzung der Steuerungsanwendungen durch die Überwachungseinrichtung auch verwaltet.

Erfindungsgemäß gibt eine Zugriffssteuerungseinrichtung durch die Ablaufsteuerungskomponenten genutzte Kommunikationsnetz-Schnittstellen zum Zugriff frei. Dabei überprüft die Zugriffssteuerungseinrichtung zweite Zugriffsrechte zur Nutzung der Kommunikationsnetz-Schnittstellen. Vorteilhafterweise werden die zweiten Zugriffsrechte zur Nutzung der Kommunikationsnetz-Schnittstellen durch die Zugriffssteuerungseinrichtung auch verwaltet.

Bei einer Anfrage eines Benutzers zur Überwachung von Datenverkehr, der von einer ausgewählten Steuerungsanwendung ausgeht bzw. dort terminiert, fragt die Zugriffssteuerungseinrichtung von der Überwachungseinrichtung erfindungsgemäß erste Zugriffsrechte des Benutzers zur Nutzung der ausgewählten Steuerungsanwendung ab. Benutzer können beispielsweise Personen sowie physikalische bzw. logische Steuerungsgeräte sein. In Abhängigkeit der von der Überwachungseinrichtung abgefragten ersten Zugriffsrechte räumt die Zugriffssteuerungseinrichtung für die angefragte Überwachung des Datenverkehrs zweite Zugriffsrechte zur Nutzung der Kommunikationsnetz-Schnittstellen ein, die der ausgewählten Steuerungsanwendung zugeordnet sind.

Mit der vorliegenden Erfindung ist ein Schutz von kritischer Kommunikation, die beispielsweise Produktionsdaten, Passwörter, Schlüssel oder Token umfasst, vor einem Aufzeichnen durch nicht-autorisierte Anwender möglich, ohne dass hierfür neue Benutzerrollen definiert und verwaltet werden müssen. Vielmehr kann insbesondere auf bereits existierende Benutzerrollen aus Container-Orchestrierungssystemen zurückgegriffen werden. Damit kann ein Rollen-abhängiges Einschränken einer Aufzeichnung von Datenverkehr in einem Kommunikationsnetz auf Benutzer realisiert werden, denen zu überwachende Container bereits durch bestehende Benutzerrollen zugeordnet sind.

Entsprechend einer bevorzugten Ausgestaltung der vorliegenden Erfindung werden Funktionen zur Überwachung von Steuerungsanwendungen zugeordnetem Datenverkehr jeweils als Überwachungsdienst bereitgestellt. In diesem Fall werden Anfragen von Benutzern zur Überwachung von Datenverkehr an einen Dienstzugangspunkt gerichtet, der für die Benutzer mittels der Zugriffssteuerungseinrichtung erste Zugriffsrechte von der Überwachungseinrichtung abfragt. Insbesondere steuert die Zugriffssteuerungseinrichtung bei Vorliegen von ersten Zugriffsrechten zur Nutzung einer jeweils ausgewählten Steuerungsanwendung einen Start eines Überwachungsdienstes für den der ausgewählten Steuerungsanwendung zugeordneten Datenverkehr. Damit kann die Zugriffssteuerungseinrichtung dem Überwachungsdienst zweite Zugriffsrechte zur Nutzung der Kommunikationsnetz-Schnittstellen einräumen, die der ausgewählten Steuerungsanwendung zugeordnet sind.

Vorteilhafterweise klassifiziert die Zugriffssteuerungseinrichtung die Kommunikationsnetz-Schnittstellen entsprechend durch die Überwachungseinrichtung erfassten Systemressourcen-Kategorien. Dabei wird eine von einer Ablaufsteuerungskomponente umfasste Kommunikationsnetz-Schnittstelle durch die Zugriffssteuerungseinrichtung als Ablaufsteuerungskomponente klassifiziert, während eine von einer Ablaufsteuerungskomponente unabhängige Kommunikationsnetz-Schnittstelle durch die Zugriffssteuerungseinrichtung als Server-Einrichtung klassifiziert wird. Damit kann die Überwachungseinrichtung bei Anfragen von Benutzern zur Überwachung von Datenverkehr jeweils überprüfen, ob dem jeweiligen Benutzer erste Zugriffsrechte zur Nutzung klassifizierter Ablaufsteuerungskomponenten bzw. Server-Einrichtungen zugeordnet sind. Dementsprechend übermittelt die Überwachungseinrichtung dies als Abfrageergebnis an die Zugriffssteuerungseinheit. Entsprechend einer weiteren Ausgestaltung der vorliegenden Erfindung fragt die Zugriffssteuerungseinrichtung die ersten Zugriffsrechte von der Überwachungseinrichtung unter Angabe der klassifizierten Ablaufsteuerungskomponenten bzw. Server-Einrichtungen ab. Auf diese Weise können bestehende Zugriffsrechte zuverlässig zur Einräumung von Rechten zur Aufzeichnung von Datenverkehr zugeordnet werden. Entsprechend einer alternativen Ausführungsform der vorliegenden Erfindung kann vorgesehen sein, dass die Zugriffssteuerungseinrichtung die ersten Zugriffsrechte von der Überwachungseinrichtung unter Angabe der jeweils ausgewählten Steuerungsanwendung abfragt.

Darüber hinaus können beispielsweise mehrere Steuerungsanwendungen innerhalb eines Steuerungsdienstes gebündelt werden. In diesem Fall fragt die Zugriffssteuerungseinrichtung bei einer Anfrage eines Benutzers zur Überwachung von Datenverkehr, der dem Steuerungsdienst zugeordnet ist, von der Überwachungseinrichtung erste Zugriffsrechte des Benutzers zur Nutzung der vom Steuerungsdienst umfassten Steuerungsanwendung ab. In Abhängigkeit der für den Steuerungsdienst von der Überwachungseinrichtung abgefragten ersten Zugriffsrechte räumt die Zugriffssteuerungseinrichtung zweite Zugriffsrechte zur Nutzung der Kommunikationsnetz-Schnittstellen ein, die dem ausgewählten Steuerungsdienst zugeordnet sind.

Das erfindungsgemäße Zugriffssteuerungssystem ist insbesondere zur Durchführung eines Verfahrens entsprechend vorangehenden Ausführungen geeignet und umfasst einer Überwachungseinrichtung, die dazu ausgestaltet und eingerichtet ist, ein Anlegen, Löschen bzw. Ändern von Ablaufsteuerungskomponenten zu steuern, jeweils mittels der Ablaufsteuerungskomponenten bereitgestellte Steuerungsanwendungen mit ihrem Ausführungsstatus zu registrieren und erste Zugriffsrechte zur Nutzung der Steuerungsanwendungen zu überprüfen. Dabei sind die Ablaufsteuerungskomponenten in mittels Server-Einrichtungen gebildete Ablaufsteuerungsumgebungen ladbar und dort ausführbar. Außerdem ist eine Zugriffssteuerungseinrichtung vorgesehen, die dazu ausgestaltet und eingerichtet ist, durch die Ablaufsteuerungskomponenten genutzte Kommunikationsnetz-Schnittstellen zum Zugriff freizugeben und zweite Zugriffsrechte zur Nutzung der Kommunikationsnetz-Schnittstellen zu überprüfen.

Die Zugriffssteuerungseinrichtung ist erfindungsgemäß ferner dazu ausgestaltet und eingerichtet, bei einer Anfrage eines Benutzers zur Überwachung von Datenverkehr, der von einer ausgewählten Steuerungsanwendung ausgeht bzw. dort terminiert, von der Überwachungseinrichtung erste Zugriffsrechte des Benutzers zur Nutzung der ausgewählten Steuerungsanwendung abzufragen. Darüber hinaus ist die Zugriffssteuerungseinrichtung dazu ausgestaltet und eingerichtet, in Abhängigkeit der von der Überwachungseinrichtung abgefragten ersten Zugriffsrechte für die angefragte Überwachung des Datenverkehrs zweite Zugriffsrechte zur Nutzung der Kommunikationsnetz-Schnittstellen einzuräumen, die der ausgewählten Steuerungsanwendung zugeordnet sind.

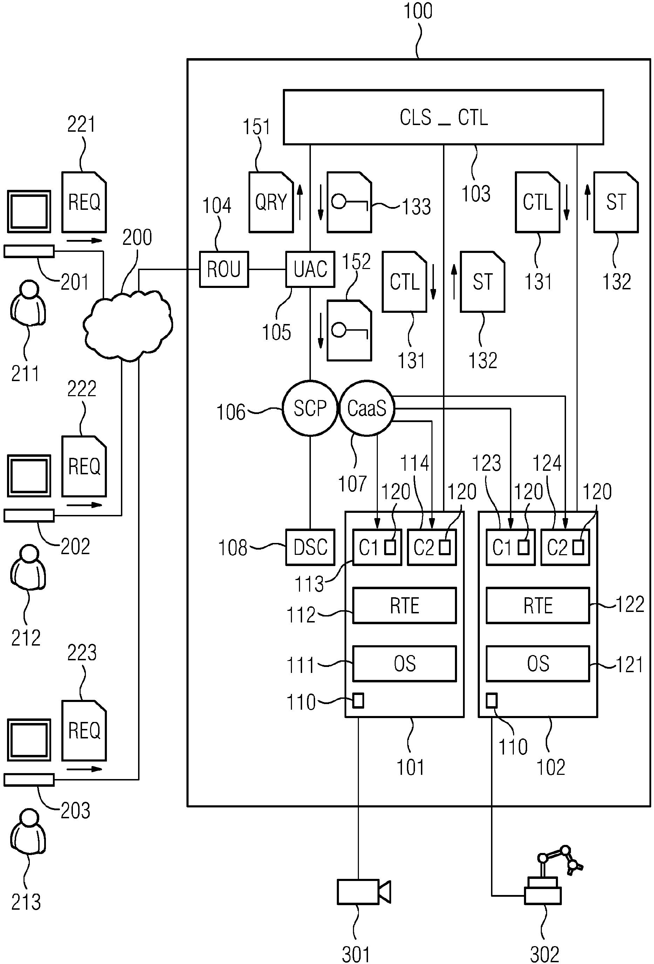

Die vorliegende Erfindung wird nachfolgend an einem Ausführungsbeispiel anhand der Zeichnung näher erläutert. Es zeigt die
- Figur: eine schematische Darstellung einer Anordnung mit einem Rechner-Cluster zur Bereitstellung von Steuerungsanwendungen über ein Kommunikationsnetz an mehrere Benutzer bzw. Endgeräte.

Die in der Figur dargestellte Anordnung umfasst ein Rechner-Cluster 100 mit mehreren Server-Einrichtungen 101-102 zur Bereitstellung von Steuerungsanwendungen, einer den Server-Einrichtungen 101-102 zugeordneten Überwachungseinrichtung 103 und einer Router-Einheit 104 zur Entgegennahme von Anfragen 221-223 zur Nutzung der Steuerungsanwendungen. Mittels der Steuerungsanwendungen werden beispielsweise Dienste bzw. Funktionen eines industriellen Automatisierungssystems an eine Vielzahl von Benutzern 201-203 bereitgestellt. Vorzugsweise umfassen die Dienste Schnittstellendefinitionen, die für einen dauerhaften Zugriff auf die Dienste genutzt werden können. Darüber hinaus können die Dienste jeweils mehrere gleichartige oder identische Steuerungsanwendungen umfassen, die jeweils durch unterschiedliche Server-Einrichtungen bereitgestellt werden. Eine Bereitstellung mehrerer gleichartiger Steuerungsanwendungen auf unterschiedlichen Server-Einrichtungen gleichzeitig kann beispielsweise mittels Kubernetes-Daemon Sets durch die Überwachungseinrichtung 103 gesteuert werden.

Außerdem umfasst die in der Figur dargestellte Anordnung zur Nutzung der bereitgestellten Steuerungsanwendungen mehrere Endgeräte 201-203, die über ein Kommunikationsnetz 200 für eine Übermittlung zeitkritischer Daten mit dem Rechner-Cluster 100 verbunden sind und die Anfragen 221-223 zur Nutzung der Steuerungsanwendungen zunächst an den die Router-Einheit 104 senden. Grundsätzlich können die Endgeräte 201-203 auch als logische bzw. virtualisierte Geräte realisiert sein. Die Router-Einheit 104 kann beispielsweise eine als Kubernetes Ingress ausgestaltete Anwender-Schnittstelle umfassen. Das Kommunikationsnetz ist vorzugsweise als Time-Sensitive Network ausgestaltet, insbesondere entsprechend IEEE 802.1Q, IEEE 802.1AB, IEEE 802.1AS, IEEE 802.1BA bzw. IEEE 802.1CB.

Die Server-Einrichtungen 101-102 können als Server oder virtuelle Maschinen ausgestaltet sein und beispielsweise Steuerungsgeräte eines industriellen Automatisierungssystems, insbesondere speicherprogrammierbare Steuerungen, oder Feldgeräte, beispielsweise Sensoren oder Aktoren, implementieren. Im vorliegenden Ausführungsbeispiel dienen die Server-Einrichtungen 101-102 einem Austausch von Steuerungs- und Messgrößen mit durch die Server-Einrichtungen 101-102 gesteuerten Maschinen oder Vorrichtungen 301-302. Insbesondere sind die Server-Einrichtungen 101 für eine Ermittlung geeigneter Steuerungsgrößen aus erfassten Messgrößen vorgesehen.

Die Endgeräte 201-203 können insbesondere Bedien- und Beobachtungsstation sein und zur Visualisierung von Prozessdaten bzw. Mess- und Steuerungsgrößen dienen, die durch die Server-Einrichtungen 101-102 oder andere Automatisierungsgeräte verarbeitet bzw. erfasst werden. Beispielsweise können die Endgeräte 201-203 zur Anzeige von Werten eines Regelungskreises und zur Veränderung von Regelungsparametern oder -programmen verwendet. Im vorliegenden Ausführungsbeispiel sind die Endgeräte 201-203 außerdem dafür vorgesehen, eine Überwachung von den Steuerungsanwendungen zugeordnetem Datenverkehr zu steuern und Überwachungsergebnisse an einer graphischen Benutzerschnittstelle darzustellen.

Die Steuerungsanwendungen werden jeweils mittels Software-Containern 113-114, 123-124 bereitgestellt, die Ablaufsteuerungskomponenten bilden und in auf den Server-Einrichtungen 101-102 installierte Ablaufsteuerungsumgebungen 112, 122 ladbar und dort ausführbar sind. Die Ablaufsteuerungsumgebungen 112, 122 laufen wiederum jeweils auf einem Host-Betriebssystem 111, 121 der jeweiligen Server-Einrichtung 101-102 ab. Die Software-Container 113-114, 123-124 können grundsätzlich auf jeweils andere Server-Einrichtungen zur dortigen Ausführung migriert werden oder auf mehreren Server-Einrichtungen zeitgleich ausgeführt werden. Insbesondere laufen die Software-Container 113-114, 123-124 jeweils von anderen Software-Containern isoliert ab. Dabei nutzen die Software-Container 113-114, 123-124 jeweils gemeinsam mit anderen auf der jeweiligen Server-Einrichtung 101-102 ablaufenden Software-Containern einen Kernel des Host-Betriebssystems 111, 121 der jeweiligen Server-Einrichtung 101-102.

Eine Isolation der Software-Container 113-114, 123-124 bzw. eine Isolation von ausgewählten Betriebssystemmitteln untereinander wird insbesondere mittels Control Groups und Namespacing realisiert. Mittels Control Groups lassen sich Prozessgruppen definieren, um verfügbare Ressourcen für ausgewählte Gruppen zu beschränken. Über Namespaces können einzelne Prozesse oder Control Groups gegenüber anderen Prozessen oder Control Groups isoliert bzw. verborgen werden. Speicherabbilder für die Software-Container 113-114, 123-124 können beispielsweise aus einem durch eine Vielzahl von Nutzern lesend bzw. schreibend zugreifbaren Speicher- und Bereitstellungssystem abgerufen werden.

Die den Server-Einrichtungen 101-102 innerhalb des Rechner-Clusters 100 zugeordnete Überwachungseinrichtung 103 erfasst mittels entsprechender Überwachungsaufträge 131 ein Anlegen, Löschen bzw. Ändern der Software-Container 113-114, 123-124 bzw. von die Software-Container 113-114, 123-124 umfassenden Kubernetes-Pods und registriert die zugeordneten Steuerungsanwendungen mit ihrem jeweils zurückgemeldeten Ausführungsstatus 132. Vorzugsweise ist die Überwachungseinrichtung 103 als Kubernetes-API-Server ausgestaltet. Im vorliegenden Ausführungsbeispiel umfasst das Anlegen, Löschen bzw. Ändern der Ablaufsteuerungskomponenten insbesondere jeweils ein Allokieren oder Freigeben von Ressourcen in der jeweiligen Server-Einrichtung.

Darüber hinaus umfasst die in der Figur dargestellte Anordnung eine der Router-Einheit 104 nachgelagerte Zugriffssteuerungseinrichtung 105, die insbesondere dafür vorgesehen ist, durch die Software-Container 113-114, 123-124 genutzte Kommunikationsnetz-Schnittstellen 110, 120 zum Zugriff freizugeben. Während die Überwachungseinrichtung 103 erste Zugriffsrechte zur Nutzung der Steuerungsanwendungen verwaltet und überprüft, werden zweite Zugriffsrechte zur Nutzung der Kommunikationsnetz-Schnittstellen 110, 120 durch die mit der Überwachungseinrichtung 103 verbundene Zugriffssteuerungseinrichtung 105 verwaltet und überprüft.

Bei Anfragen 221-223 von Benutzern 201-203 zur Überwachung von Datenverkehr, der von einer ausgewählten Steuerungsanwendung ausgeht bzw. dort terminiert, fragt die Zugriffssteuerungseinrichtung 105 von der Überwachungseinrichtung 103 erste Zugriffsrechte 133 des jeweiligen Benutzers 201-203 zur Nutzung der ausgewählten Steuerungsanwendung mittels einer entsprechenden Anfrage 151 ab. In Abhängigkeit der von der Überwachungseinrichtung 103 abgefragten ersten Zugriffsrechte 133 räumt die Zugriffssteuerungseinrichtung 105 für die angefragte Überwachung des Datenverkehrs zweite Zugriffsrechte 152 zur Nutzung der Kommunikationsnetz-Schnittstellen 110, 120 ein, die der ausgewählten Steuerungsanwendung zugeordnet sind.

Im vorliegenden Ausführungsbeispiel werden Funktionen zur Überwachung von Steuerungsanwendungen zugeordnetem Datenverkehr jeweils als Überwachungsdienst 107 bereitgestellt. Anfragen 221-223 von Benutzern 201-203 zur Überwachung von Datenverkehr werden an einen der Zugriffssteuerungseinrichtung 105 nachgelagerten Dienstzugangspunkt 106 weitergeleitet, der für die Benutzer 201-203 wiederum über die Zugriffssteuerungseinrichtung 105 die ersten Zugriffsrechte 133 von der Überwachungseinrichtung 103 abfragt. Dabei werden die ersten Zugriffsrechte 133 durch die Zugriffssteuerungseinrichtung 105 in zweite Zugriffsrechte 152 zur Nutzung der Kommunikationsnetz-Schnittstellen 110, 120 aufgelöst. Insbesondere steuert die Zugriffssteuerungseinrichtung 105 bei Vorliegen von ersten Zugriffsrechten 133 zur Nutzung einer jeweils ausgewählten Steuerungsanwendung einen Start eines Überwachungsdienstes 107 für den der ausgewählten Steuerungsanwendung zugeordneten Datenverkehr und räumt diesem Überwachungsdienst 107 zweite Zugriffsrechte 152 zur Nutzung der Kommunikationsnetz-Schnittstellen 110, 120 ein, die der ausgewählten Steuerungsanwendung zugeordnet sind.

Vorzugsweise klassifiziert die Zugriffssteuerungseinrichtung 105 die Kommunikationsnetz-Schnittstellen 110, 120 entsprechend durch die Überwachungseinrichtung 103 erfassten Systemressourcen-Kategorien. Dabei wird eine von einem Software-Container 113-114, 123-124 bzw. Pod umfasste Kommunikationsnetz-Schnittstelle 120 durch die Zugriffssteuerungseinrichtung 105 als Pod klassifiziert, während eine von einem Software-Container 113-114, 123-124 bzw. Pod unabhängige Kommunikationsnetz-Schnittstelle 110 durch die Zugriffssteuerungseinrichtung als Server-Einrichtung bzw. Node klassifiziert wird. Dementsprechend überprüft die Überwachungseinrichtung 103 bei Anfragen von Benutzern 201-203 zur Überwachung von Datenverkehr jeweils, ob dem jeweiligen Benutzer 201-203 erste Zugriffsrechte 133 zur Nutzung klassifizierter Pods bzw. Nodes zugeordnet sind, und übermittelt dies als Abfrageergebnis an die Zugriffssteuerungseinrichtung 105. Damit kann die Zugriffssteuerungseinrichtung 105 die ersten Zugriffsrechte 133 von der Überwachungseinrichtung 103 vorteilhafterweise unter Angabe der klassifizierten Pods bzw. Nodes abfragen. Grundsätzlich ist es auch möglich, dass die Zugriffssteuerungseinrichtung 105 die ersten Zugriffsrechte 133 von der Überwachungseinrichtung 103 unter Angabe der jeweils ausgewählten Steuerungsanwendung abfragt.

Fällt die Überprüfung der ersten Zugriffsrechte 133 durch die Überwachungseinrichtung 103 positiv aus, dann validiert bzw. vervollständigt die Zugriffssteuerungseinrichtung 105 für eine Netzwerkaufzeichnung erforderlichen Systeminformationen, um beispielsweise überhaupt von einem virtuellen IP-Stack eines Containers bzw. Pods oder einem isolierten System-IP-Stack aufzeichnen zu können. Dafür benötigte Betriebssystemnahe Informationen, wie Network Namespace-Referenzen, können zwar grundsätzlich vom jeweiligen Benutzer bzw. von einem für ihn agierenden Werkzeug zusammen mit einer Anforderung übertragen werden. Solche Informationen werden vorteilhafterweise gegen einen tatsächlichen Systemzustand überprüft, um auszuschließen, dass ein Benutzer eine andere Systemressource referenziert als diejenige, auf die er vorgibt zuzugreifen. Grundsätzlich kann eine von einem Benutzer angegebene Systemreferenz komplett ignoriert werden und eine Systemreferenz stattdessen auf Basis einer vom Benutzer angegebenen Container-Referenz mittels eines vertrauenswürdigen lokalen Discovery Service 108 ermittelt werden. Eine Realisierung eines solchen Discovery Service ist beispielsweise in der älteren europäischen Patentanmeldung mit dem Anmeldeaktenzeichen 19198405.3 beschrieben. Auf Basis von der Zugriffssteuerungseinrichtung 105 überprüfter bzw. vertrauenswürdig ermittelter Parameter und Systemreferenzen kann der Überwachungsdienst 107 schließlich die eigentliche Netzwerkaufzeichnung durchführen.

Wenn mehrere Steuerungsanwendungen innerhalb eines Steuerungsdienstes gebündelt werden, fragt die Zugriffssteuerungseinrichtung 105 bei einer Anfrage 221-223 eines Benutzers 201-203 zur Überwachung von Datenverkehr, der dem Steuerungsdienst zugeordnet ist, von der Überwachungseinrichtung 103 erste Zugriffsrechte 133 des Benutzers 201-203 zur Nutzung der vom Steuerungsdienst umfassten Steuerungsanwendung ab. In Abhängigkeit der für den Steuerungsdienst von der Überwachungseinrichtung 103 abgefragten ersten Zugriffsrechte 133 räumt die Zugriffssteuerungseinrichtung 105 zweite Zugriffsrechte 152 zur Nutzung der Kommunikationsnetz-Schnittstellen 110, 120 ein, die dem ausgewählten Steuerungsdienst zugeordnet sind.

## Patentansprüche

1. Verfahren zur Überwachung von Datenverkehr in einem Kommunikationsnetz, bei dem
- über das Kommunikationsnetz Steuerungsanwendungen durch Server-Einrichtungen (101-102) zur Nutzung bereitgestellt werden,
- die Steuerungsanwendungen jeweils mittels Ablaufsteuerungskomponenten (113-114, 123-124) bereitgestellt werden, die in mittels der Server-Einrichtungen gebildete Ablaufsteuerungsumgebungen (112, 122) ladbar und dort ausführbar sind,
- eine den Server-Einrichtungen zugeordnete Überwachungseinrichtung (103) ein Anlegen, Löschen und/oder Ändern der Ablaufsteuerungskomponenten steuert und die Steuerungsanwendungen mit ihrem jeweiligen Ausführungsstatus registriert, wobei die Überwachungseinrichtung erste Zugriffsrechte (133) zur Nutzung der Steuerungsanwendungen überprüft,
- eine Zugriffssteuerungseinrichtung (105) durch die Ablaufsteuerungskomponenten genutzte Kommunikationsnetz-Schnittstellen (110, 120) zum Zugriff freigibt, wobei die Zugriffssteuerungseinrichtung zweite Zugriffsrechte (152) zur Nutzung der Kommunikationsnetz-Schnittstellen überprüft,
- die Zugriffssteuerungseinrichtung bei einer Anfrage (221-223) eines Benutzers (211-213) zur Überwachung von Datenverkehr, der von einer ausgewählten Steuerungsanwendung ausgeht und/oder dort terminiert, von der Überwachungseinrichtung erste Zugriffsrechte des Benutzers zur Nutzung der ausgewählten Steuerungsanwendung abfragt,
- die Zugriffssteuerungseinrichtung in Abhängigkeit der von der Überwachungseinrichtung abgefragten ersten Zugriffsrechte für die angefragte Überwachung des Datenverkehrs zweite Zugriffsrechte zur Nutzung der Kommunikationsnetz-Schnittstellen einräumt, die der ausgewählten Steuerungsanwendung zugeordnet sind.

2. Verfahren nach Anspruch 1,
bei dem Funktionen zur Überwachung von Steuerungsanwendungen zugeordnetem Datenverkehr jeweils als Überwachungsdienst bereitgestellt werden, bei dem Anfragen von Benutzern zur Überwachung von Datenverkehr an einen Dienstzugangspunkt gerichtet werden, bei dem der Dienstzugangspunkt für die Benutzer mittels der Zugriffssteuerungseinrichtung erste Zugriffsrechte von der Überwachungseinrichtung abfragt.

3. Verfahren nach Anspruch 2,
bei dem die Zugriffssteuerungseinrichtung bei Vorliegen von ersten Zugriffsrechten zur Nutzung einer jeweils ausgewählten Steuerungsanwendung einen Start eines Überwachungsdienstes für den der ausgewählten Steuerungsanwendung zugeordneten Datenverkehr steuert und diesem Überwachungsdienst zweite Zugriffsrechte zur Nutzung der Kommunikationsnetz-Schnittstellen einräumt, die der ausgewählten Steuerungsanwendung zugeordnet sind.

4. Verfahren nach einem der Ansprüche 1 bis 3,
bei dem die Zugriffssteuerungseinrichtung die Kommunikationsnetz-Schnittstellen entsprechend durch die Überwachungseinrichtung erfassten Systemressourcen-Kategorien klassifiziert, bei dem eine von einer Ablaufsteuerungskomponente umfasste Kommunikationsnetz-Schnittstelle durch die Zugriffssteuerungseinrichtung als Ablaufsteuerungskomponente klassifiziert wird, eine von einer Ablaufsteuerungskomponente unabhängige Kommunikationsnetz-Schnittstelle durch die Zugriffssteuerungseinrichtung als Server-Einrichtung klassifiziert wird und bei dem die Überwachungseinrichtung bei Anfragen von Benutzern zur Überwachung von Datenverkehr jeweils überprüft, ob dem jeweiligen Benutzer erste Zugriffsrechte zur Nutzung klassifizierter Ablaufsteuerungskomponenten und/oder Server-Einrichtungen zugeordnet sind, und dies als Abfrageergebnis an die Zugriffssteuerungseinheit übermittelt.

5. Verfahren nach Anspruch 4,
bei dem die Zugriffssteuerungseinrichtung die ersten Zugriffsrechte von der Überwachungseinrichtung unter Angabe der klassifizierten Ablaufsteuerungskomponenten und/oder Server-Einrichtungen abfragt.

6. Verfahren nach einem der Ansprüche 1 bis 4,
bei dem die Zugriffssteuerungseinrichtung die ersten Zugriffsrechte von der Überwachungseinrichtung unter Angabe der jeweils ausgewählten Steuerungsanwendung abfragt.

7. Verfahren nach einem der Ansprüche 1 bis 6,
bei dem mehrere Steuerungsanwendungen innerhalb eines Steuerungsdienstes gebündelt werden, bei dem die Zugriffssteuerungseinrichtung bei einer Anfrage eines Benutzers zur Überwachung von Datenverkehr, der dem Steuerungsdienst zugeordnet ist, von der Überwachungseinrichtung erste Zugriffsrechte des Benutzers zur Nutzung der vom Steuerungsdienst umfassten Steuerungsanwendung abfragt und bei dem die Zugriffssteuerungseinrichtung in Abhängigkeit der für den Steuerungsdienst von der Überwachungseinrichtung abgefragten ersten Zugriffsrechte zweite Zugriffsrechte zur Nutzung der Kommunikationsnetz-Schnittstellen einräumt, die dem ausgewählten Steuerungsdienst zugeordnet sind.

8. Verfahren nach einem der Ansprüche 1 bis 7,
bei dem Benutzer Personen, physikalische und/oder logische Steuerungsgeräte umfassen.

9. Verfahren nach einem der Ansprüche 1 bis 8,
bei dem die Ablaufsteuerungskomponenten auf jeweils andere Server-Einrichtungen zur dortigen Ausführung migrierbar und/oder auf jeweils anderen Server-Einrichtungen zeitgleich ausführbar sind.

10. Verfahren nach einem der Ansprüche 1 bis 9,
bei dem die Ablaufsteuerungskomponenten Software-Container sind.

11. Verfahren nach Anspruch 10,
bei dem Speicherabbilder für die Software-Container aus einem durch eine Vielzahl von Nutzern lesend und/oder schreibend zugreifbaren Speicher- und Bereitstellungssystem abrufbar sind.

12. Verfahren nach einem der Ansprüche 1 bis 11,
bei dem die Überwachungseinrichtung erste Zugriffsrechte zur Nutzung der Steuerungsanwendungen verwaltet und bei dem die Zugriffssteuerungseinrichtung zweite Zugriffsrechte zur Nutzung der Kommunikationsnetz-Schnittstellen verwaltet.

13. Zugriffssteuerungssystem, insbesondere zur Durchführung eines Verfahrens nach einem der Ansprüche 1 bis 12, mit
- einer Überwachungseinrichtung (103), die dazu ausgestaltet und eingerichtet ist, ein Anlegen, Löschen und/oder Ändern von Ablaufsteuerungskomponenten (113-114, 123-124) zu steuern, jeweils mittels der Ablaufsteuerungskomponenten bereitgestellte Steuerungsanwendungen mit ihrem Ausführungsstatus zu registrieren und erste Zugriffsrechte (133) zur Nutzung der Steuerungsanwendungen zu überprüfen, wobei die Ablaufsteuerungskomponenten in mittels Server-Einrichtungen (101-102) gebildete Ablaufsteuerungsumgebungen (112, 122) ladbar und dort ausführbar sind,
- einer Zugriffssteuerungseinrichtung (105), die dazu ausgestaltet und eingerichtet ist, durch die Ablaufsteuerungskomponenten genutzte Kommunikationsnetz-Schnittstellen (110, 120) zum Zugriff freizugeben und zweite Zugriffsrechte (152) zur Nutzung der Kommunikationsnetz-Schnittstellen zu überprüfen,
- wobei die Zugriffssteuerungseinrichtung ferner dazu ausgestaltet und eingerichtet ist, bei einer Anfrage (221-223) eines Benutzers (211-213) zur Überwachung von Datenverkehr, der von einer ausgewählten Steuerungsanwendung ausgeht und/oder dort terminiert, von der Überwachungseinrichtung erste Zugriffsrechte des Benutzers zur Nutzung der ausgewählten Steuerungsanwendung abzufragen,
- wobei die Zugriffssteuerungseinrichtung ferner dazu ausgestaltet und eingerichtet ist, in Abhängigkeit der von der Überwachungseinrichtung abgefragten ersten Zugriffsrechte für die angefragte Überwachung des Datenverkehrs zweite Zugriffsrechte zur Nutzung der Kommunikationsnetz-Schnittstellen einzuräumen, die der ausgewählten Steuerungsanwendung zugeordnet sind.
